# EUROPÄISCHE PATENTSCHRIFT

(11) **EP 2 102 043 B1**
(45) Veröffentlichungstag und Bekanntmachung des Hinweises auf die Patenterteilung: **05.06.2013**
(21) Anmeldenummer: 07821335.2
(22) Anmeldetag: 15.10.2007
(51) Int. Cl.: B60S 1/38

(54) **WISCHBLATT**
WIPER BLADE
BALAI D'ESSUIE-GLACE

(30) Priorität: 14.12.2006 DE 102006059635
(43) Veröffentlichungstag der Anmeldung: 23.09.2009
(73) Patentinhaber: Robert Bosch GmbH, 70442 Stuttgart (DE)
(72) Erfinder: HAWIGHORST, Achim, 77830 Buehlertal (DE); HUESGES, Mario, 77830 Buehlertal (DE)
(86) Internationale Anmeldenummer: PCT/EP2007/060968
(87) Internationale Veröffentlichungsnummer: WO 2008/071481

(56) Entgegenhaltungen:
- EP-A- 0 625 452
- DE-A1- 10 007 808
- DE-A1- 19 731 683
- DE-A1- 19 754 449

## Beschreibung

### Stand der Technik

Die Erfindung betrifft ein Wischblatt, insbesondere für Kraftfahrzeuge gemäß dem Oberbegriff des Anspruchs 1.

Wischblätter für Kraftfahrzeuge sind in vielfältigen Bauformen bekannt. In der Regel sind die Wischblätter von komplexem Aufbau und umfassen eine Vielzahl von Bauteilen. Ein bekanntes Wischblatt ist beispielsweise in der DE 19 731 683 A1 beschrieben. Das bekannte Wischblatt umfasst eine Wischleiste mit zwei in dem Profil der Wischleiste geführten Federschienen. Die Federschienen wiederum sind über Krallenbügel mit Haltekrallen an einem Wischleistenträger festgelegt. Der Aufbau des gezeigten Wischelementes ist komplex, wodurch zu dessen Herstellung eine Vielzahl von Verfahrens- und Montageschritten notwendig sind.

Ein Wischblatt mit den Merkmalen des Oberbegriffs ist aus der EP-A-0 625 452 bekannt. Ein weiteres gattungsgemäßes Wischblatt ist darüber hinaus aus der DE-A-197 54 449 bekannt.

### Offenbarung der Erfindung

### Technische Aufgabe

Der Erfindung liegt daher die Aufgabe zugrunde, ein Wischblatt mit einem einfachen Aufbau anzugeben, welches kostengünstig herstellbar ist. Ferner besteht die Aufgabe im Bereitstellen eines entsprechenden Herstellungsverfahrens.

### Technische Lösung

Diese Aufgabe wird vorrichtungsgemäß mit den Merkmalen des Anspruchs 1 gelöst. Vorteilhafte Weiterbildungen der Erfindung sind in den Unteransprüchen angegeben. In den Rahmen der Erfindung fallen auch sämtliche Kombinationen aus zumindest zwei der in der Beschreibung, den Ansprüchen und/oder den Figuren angegebenen Merkmalen.

Der Erfindung liegt der Gedanke zugrunde, das Wischblatt einstückig auszubilden, wodurch auf eine zeitaufwendige Montage einzelner Komponenten durch Verrasten, Verschrauben, etc. mit Vorteil verzichtet werden kann. Die einstückige Ausbildung erfolgt vorzugsweise durch Umspritzen(umfasst auch Anspritzen) eines, insbesondere fertigen Wischleistenträgers in einem einer Scheibe zugewandten Abschnitt mit einer Wischleiste. Die Wischleiste (Wischgummi), welche bevorzugt aus einem wesentlich flexibleren Material besteht, als der Wischleistenträger, wird somit integraler Bestandteil des Wischleistenträgers und damit des Wischblattes. Ein späterer Befestigungsschritt an dem Wischleistenträger, insbesondere durch das Vorsehen von Federleisten und/oder Krallenbügeln kann mit Vorteil entfallen, da die Wischleiste bereits bei deren Fertigung unlösbar mit dem Wischelementträger verbunden wird. Das erfindungsgemäße Wischblatt ist nicht nur durch die verkürzte Fertigungszeit kostengünstiger herstellbar, sondern aufgrund seines einfachen Aufbaus besonders widerstandsfähig.

In Ausgestaltung der Erfindung ist mit Vorteil vorgesehen, dass das Wischblatt in einem zweistufigen Spritzgussverfahren gefertigt ist, wobei in einem ersten Verfahrensschritt der Wischelementträger, insbesondere aus Polyamid gespritzt wird und in einem zweiten Schritt der Wischleistenträger bereichsweise von einem elastischen Material umspritzt wird, welches das Wischelement bildet. Auf weitere Herstellschritte (ausgenommen etwaige Entgratungsmaßnahmen) kann mit Vorteil verzichtet werden.

Bevorzugt sind außer dem Wischleistenträger und der daran durch Umspritzen festgelegten Wischleiste keine zusätzlichen Bauteile, wie Federschienen oder Krallenbügel an der Wischleiste vorgesehen, die hierdurch einen einfachen, ausschließlich zweiteiligen Aufbau erhält.

Gemäß einer bevorzugten Ausführungsform der Erfindung ist der Wischleistenträger nicht vollflächig mit der Wischleiste verbunden, sondern umfasst einen, insbesondere aus Vollmaterial bestehenden im Wesentlichen in Längsrichtung verlaufenden Tragbalken mit einer Vielzahl von Speichen. Die Speichen sind in Längsrichtung des Tragbalkens beabstandet angeordnet und erstrecken sich in Richtung der Scheibe. Die einstückig im Spritzgussverfahren mit dem Tragbalken ausgebildeten Speichen bilden dabei den eigentlichen Träger für die Wischleiste, welche die Speichen im Bereich ihres freien Endes umgibt. Durch die Festlegung der Wischleiste an den voneinander beabstandeten Speichen wird eine gute Anlage der Wischleiste an der Scheibe gewährleistet. Die Speichen ermöglichen ein Anpassen der Wischleistenform an die Scheibenform, da die Wischleiste in einem Bereich zwischen zwei benachbarten Speichen in Richtung des Tragbalkens federn kann. Zusätzlich oder alternativ ist es denkbar, die Speichen, beispielsweise durch eine geringe Materialdicke federelastisch auszubilden und so eine noch verbesserte Anlage der Wischleiste an der Scheibe zu realisieren.

Um einen guten Halt zwischen der Wischleiste und dem Wischleistenträger, insbesondere zwischen der Wischleiste und den Speichen des Wischleistenträgers zu gewährleisten, ist in Ausgestaltung der Erfindung am Wischleistenträger, vorzugsweise im Bereich des freien Endes der Speichen ein Hintergriffabschnitt vorgesehen, der von dem Wischelement umspritzt ist. Bevorzugt ist der Hintergriffabschnitt als Verdickung ausgebildet, die von dem Wischelement hintergriffen ist, so dass die Verbindung aus Wischleiste und Wischleistenträger auch einer Zugbelastung der Wischleiste von dem Wischleistenträger weg standhalten kann.

In Ausgestaltung der Erfindung ist mit Vorteil vorgesehen, dass die Speichen in einem mittleren Abschnitt des Wischblattes länger sind als in einem äußeren Abschnitt des Wischblattes. Bevorzugt sind die Speichen, zumindest in gewissen Grenzen elastisch ausgebildet, um eine optimale Anpassung der Wischleistenform an die Scheibengeometrie beim Überstreichen der Scheibe zu gewährleisten. Bevorzugt nimmt die Länge der Speichen von einem mittleren Abschnitt des Wischblattes hin zu seinen freien Enden linear ab.

Zur Realisierung unterschiedlich langer Speichen, ist in Ausgestaltung der Erfindung vorgesehen, dass der Tragbalken des Wischleistenträgers zwei, vorzugsweise symmetrische, in Längsrichtung des Wischleistenträgers benachbarte, einstückig miteinander ausgebildete Längsabschnitte aufweist, welche winklig zueinander angeordnet sind, derart, dass ein mittlerer Bereich des Tragbalkens weiter von der Wischleiste beabstandet ist, als die freien Enden des Tragbalkens.

Zur Festlegung des Wischblattes an einem Adapter zur Montage an einem Wischerarm oder zur unmittelbaren Festlegung an einen Wischerarm, ist in Ausgestaltung der Erfindung in dem Wischleistenträger eine Aufnahmeöffnung, vorzugsweise eine Durchgangsöffnung vorzusehen, in die ein Stift des Adapters und/oder des Wischerarms einführbar ist. Es ist denkbar, die Aufnahmeöffnung mit einem Metallteil, insbesondere einer Metallhülse, die vorzugsweise von dem Wischleistenträger umspritzt ist, zu verstärken. Vorzugsweise sind einstückig mit dem Wischleistenträger ausgebildete Rastvorsprünge zur sicheren Fixierung des Adapters und/oder des fahrzeugseitigen Wischerarms vorgesehen.

Das erfindungsgemäße Verfahren umfasst im Wesentlichen (ausschließlich) zwei Fertigungsschritte. In einem ersten Fertigungsschritt wird der Wischleistenträger, insbesondere der Tragbalken mit seinen einstückig ausgebildeten Speichen in einem ersten Spritzgussschritt hergestellt. Nach dem Spritzgussprozess wird dann an den ausgehärteten Wischleistenträger die Wischleiste angespritzt. Hierzu ragt der Wischleistenträger, insbesondere mit dem freien Enden seiner Speichen, in die Spritzgussform für die Wischleiste hinein. Ein separater Befestigungsschritt von Wischleistenträger und Wischleiste, wie dieser bei separat gefertigten Bauteilen notwendig wäre, kann mit Vorteil entfallen.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: einen Wischleistenträger eines Wischblattes,
- Fig. 2:: ein fertiges Wischblatt, bei dem an den Wischleistenträger gemäß Fig. 1 eine Wischleiste durch Umspritzen angeformt ist und
- Fig. 3:: eine vergrößerte Schnittansicht des Wischblattes entlang der Schnittlinie A-A gemäß Fig. 2.

### Ausführungsformen der Erfindung

In den Figuren sind gleiche Bauteile und Bauteile mit der gleichen Funktion mit den gleichen Bezugszeichen gekennzeichnet.

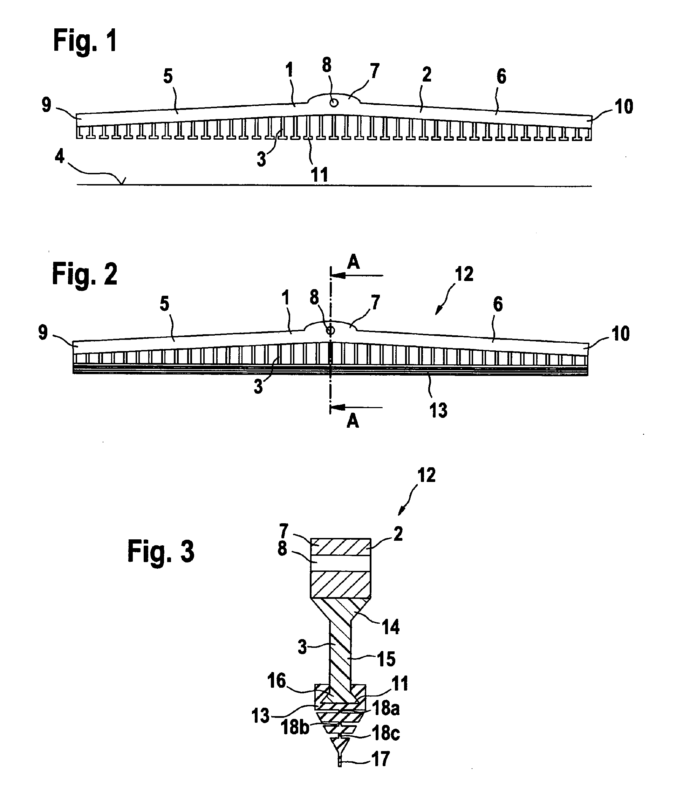

In Fig. 1 ist ein Wischleistenträger 1 aus Kunststoff, in diesem Ausführungsbeispiel aus Polyamid, dargestellt. Der Wischleistenträger 1 ist symmetrisch zu der in Fig. 2 dargestellten Schnittebene A-A ausgebildet und umfasst einen in Längsrichtung des Wischblattes verlaufenden Tragbalken 2, von dem sich eine Vielzahl von Speichen 3 in Richtung einer Scheibe 4, im Wesentlichen in Querrichtung zu seiner Längserstreckung erstrecken. Der Tragbalken 2 besteht aus zwei einstückig ausgebildeten Längsabschnitten 5, 6, die sich in einem mittleren Bereich 7 treffen. In den mittleren Bereich 7 ist eine in die Zeichnungsebene hinein verlaufende, als Durchgangsöffnung ausgebildete Aufnahmeöffnung 8 zur Festlegung des Wischleistenträgers 1 an einem Adapter vorgesehen, welcher wiederum an einem angetriebenen Wischerarm befestigbar ist. Es ist auch denkbar, den Wischleistenträger 1, bei entsprechender Ausgestaltung des Wischerarms unmittelbar am Wischerarm festzulegen. Die Länge der Speichen 3 nimmt von dem mittleren Bereich 7 in Richtung der freien Enden 9, 10 des Tragbalkens 2 linear ab. Demzufolge sind die Längsabschnitte 5, 6 winklig zueinander angeordnet. Der mittlere Bereich 7 ist im Verhältnis zu den Längsabschnitten 5, 6 zur erleichterten Festlegung des Adapters verdickt ausgebildet. Im gezeigten Ausführungsbeispiel liegen die freien Enden 11 der Speichen 3 in einer Ebene.

Wie aus Fig. 2 zu erkennen ist, ist bei einem fertigen, im Wesentlichen dreieckförmig konturierten Wischblatt 12 an dem Wischleistenträger 1 im Bereich der freien Enden 11 der Speichen 3 eine Wischleiste 13 durch Umspritzen der freien Enden 11 mit einem Wischgummimaterial festgelegt.

In Fig. 3 ist eine vergrößerte geschnittene Darstellung des Wischblattes 12 gemäß Fig. 2 entlang der Schnittlinie A-A gezeigt. Zu erkennen ist der von der Aufnahmeöffnung 8 durchsetzte mittlere Bereich 7 des Tragbalkens 2. Der Tragbalken 2 geht in einem in der Zeichnungsebene unteren Abschnitt in eine Speiche 3 über, wobei die Speiche 3 einen sich konisch in Querrichtung des Tragbalkens 2 verjüngenden Abschnitt 14 aufweist, welcher wiederum in einem unteren Bereich in einen dünnen und damit vergleichsweise flexiblen Mittelabschnitt 15 übergeht. Dieser verbreitert sich in einen Hintergriffabschnitt 16 im Bereich des freien Endes der Speiche 3. Der Hintergriffabschnitt 16 ist von der Wischleiste 12 umspritzt, d.h. hintergriffen. Das Wischleistenmaterial ist wesentlich flexibler als das Tragbalkenmaterial, um einen optimalen Wischeffekt zu erzielen. Die Wischleiste 12 ist in Querrichtung des Tragbalkens 2 flexibel ausgebildet, so dass eine untere Wischkante 17 der Wischbewegung des Tragbalkens 2 sich auf der Scheibe 4 abstützend folgen kann. Zur Realisierung dieser Flexibilität sind drei nebeneinander angeordnete Schwenkbereiche 18a, 18b und 18c (Schwenkgelenke) vorgesehen, die durch seitliche, in diesem Ausführungsbeispiel symmetrische, Aussparungen in der sich in Richtung Wischkante 17 konisch verjüngenden Wischleiste 13 gebildet sind.

## Patentansprüche

1. Wischblatt (12) mit einer Wischleiste (13) und einem Wischleistenträger (1), wobei der Wischleistenträger (1) abschnittsweise von der Wischleiste (13) umspritzt ist, wobei das Wischblatt (12) ausschließlich aus dem Wischleistenträger (1) und der daran festgelegten Wischleiste (13) besteht, **dadurch gekennzeichnet, dass** der Wischleistenträger (1) einen Tragbalken (2) mit einer Vielzahl von in Längsrichtung des Tragbalkens (2) beabstandeten, sich quer zur Längsrichtung des Tragbalkens (2) erstreckenden Speichen (3) aufweist.

2. Wischblatt (12) nach Anspruch 1,
**dadurch gekennzeichnet,**
**dass** das Wischblatt (12) in einem zweistufigen Spritzgussverfahren gefertigt ist.

3. Wischblatt (12) nach Anspruch 1,
**dadurch gekennzeichnet,**
**dass** die Speichen (3) im Bereich ihres freien Endes (11) einen Hintergriffabschnitt (16) aufweisen, der von der Wischleiste (13) hintergriffen ist.

4. Wischblatt (12) nach einem der vorhergehenden Ansprüche,
**dadurch gekennzeichnet,**
**dass** die Speichen (3) in einem mittleren Abschnitt des Wischblatts (12) länger sind als in den äußeren Abschnitten des Wischblatts (12).

5. Wischblatt (12) nach einem der vorhergehenden Ansprüche,
**dadurch gekennzeichnet,**
**dass** der Tragbalken (2) zwei in Längsrichtung des Wischleistenträgers (1) benachbarte Längsabschnitte (5, 6) aufweist, die winklig zueinander angeordnet sind, derart, dass die freien Enden (9, 10) weniger weit beabstandet sind von der Wischleiste (13) als ein mittlerer Bereich (7) des Tragbalkens (2).

6. Wischblatt (12) nach einem der vorhergehenden Ansprüche,
**dadurch gekennzeichnet,**
**dass** in dem Wischleistenträger (1) eine Aufnahmeöffnung (8) zur Festlegung an einem Adapter und/oder an einem Wischerarm vorgesehen ist.

## Claims

1. Wiper blade (12) having a wiper strip (13) and having a wiper strip carrier (1), wherein the wiper strip carrier (1) is encapsulated in sections by the wiper strip (13), wherein the wiper blade (12) is composed exclusively of the wiper strip carrier (1) and of the wiper strip (13) fixed thereto, **characterized in that** the wiper strip carrier (1) has a beam (2) with a plurality of spokes (3) which are spaced apart in the longitudinal direction of the beam (2) and which extend transversely with respect to the longitudinal direction of the beam (2).

2. Wiper blade (12) according to Claim 1,
**characterized**
**in that** the wiper blade (12) is manufactured in a two-stage injection-moulding process.

3. Wiper blade (12) according to Claim 1,
**characterized**
**in that** the spokes (3) have, in the region of the free end (11) thereof, an engage-behind portion (16) which is engaged behind by the wiper strip (13).

4. Wiper blade (12) according to one of the preceding claims,
**characterized**
**in that** the spokes (3) are longer in a central portion of the wiper blade (12) than in the outer portions of the wiper blade (12).

5. Wiper blade (12) according to one of the preceding claims,
**characterized**
**in that** the beam (2) has two longitudinal portions (5, 6) which are adjacent in the longitudinal direction of the wiper strip carrier (1) and which are arranged at an angle relative to one another, such that the free ends (9, 10) are spaced apart from the wiper strip (13) to a lesser extent than a central region (7) of the beam (2).

6. Wiper blade (12) according to one of the preceding claims,
**characterized**
**in that** a receiving opening (8) for fixing to an adapter and/or to a wiper arm is provided in the wiper strip carrier (1).

## Revendications

1. Balai d'essuie-glace (12) comprenant une raclette de balai d'essuie-glace (13) et un support de raclette de balai d'essuie-glace (1), le support de raclette de balai d'essuie-glace (1) étant surmoulé en partie par la raclette de balai d'essuie-glace (13), le balai d'essuie-glace (12) se composant exclusivement du support de raclette de balai d'essuie-glace (1) et de la raclette de balai d'essuie-glace (13) fixée sur celui-ci, **caractérisé en ce que** le support de raclette de balai d'essuie-glace (1) présente une barre de support (2) avec une pluralité de rayons (3) espacés dans la direction longitudinale de la barre de support (2) et s'étendant transversalement à la direction longitudinale de la barre de support (2).

2. Balai d'essuie-glace (12) selon la revendication 1,
**caractérisé en ce que**
le balai d'essuie-glace (12) est fabriqué dans un procédé de moulage par injection à deux étapes.

3. Balai d'essuie-glace (12) selon la revendication 1,
**caractérisé en ce que**
les rayons (3) présentent, dans la région de leur extrémité libre (11), une portion de préhension par l'arrière (16) qui est saisie par l'arrière par la raclette de balai d'essuie-glace (13).

4. Balai d'essuie-glace (12) selon l'une quelconque des revendications précédentes,
**caractérisé en ce que**
les rayons (3) sont plus longs dans une portion centrale du balai d'essuie-glace (12) que dans les portions extérieures du balai d'essuie-glace (12).

5. Balai d'essuie-glace (12) selon l'une quelconque des revendications précédentes,
**caractérisé en ce que**
la barre de support (2) présente deux portions longitudinales (5, 6) adjacentes dans la direction longitudinale du support de raclette de balai d'essuie-glace (1), lesquelles sont disposées suivant un certain angle l'une par rapport à l'autre, de telle sorte que les extrémités libres (9, 10) soit moins espacées de la raclette de balai d'essuie-glace (13) qu'une région centrale (7) de la barre de support (2).

6. Balai d'essuie-glace (12) selon l'une quelconque des revendications précédentes,
**caractérisé en ce que**
dans le support de raclette de balai d'essuie-glace (1) est prévue une ouverture de réception (8) pour la fixation à un adaptateur et/ou à un bras d'essuie-glace.
